(19) Europäisches Patentamt
European Patent Office
Office européen des brevets

(11) **EP 4 224 436 A1**

(12) **EUROPÄISCHE PATENTANMELDUNG**

(43) Veröffentlichungstag:
**09.08.2023 Patentblatt 2023/32**

(21) Anmeldenummer: **23151466.2**

(22) Anmeldetag: **13.01.2023**

(51) Internationale Patentklassifikation (IPC):
**G06V 20/52** (2022.01) **G06V 10/82** (2022.01)
**G06V 10/774** (2022.01)

(52) Gemeinsame Patentklassifikation (CPC):
**G06V 20/52; G06V 10/774; G06V 10/82**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(30) Priorität: **03.02.2022 DE 102022201127**

(71) Anmelder: **ZF Friedrichshafen AG**
**88046 Friedrichshafen (DE)**

(72) Erfinder:
- **Mualla, Firas**
  **66280 Sulzbach (DE)**
- **Schneider, Georg**
  **56182 Urbar (DE)**
- **Murzyn, Nils**
  **66119 Saarbrücken (DE)**
- **Parsi, Vijay**
  **66133 Saarbrücken (DE)**

(74) Vertreter: **ZF Friedrichshafen AG**
**Gewerblicher Rechtsschutz**
**Löwentalerstraße 20**
**88046 Friedrichshafen (DE)**

(54) **VERFAHREN UND COMPUTERPROGRAMM ZUM CHARAKTERISIEREN VON ZUKÜNFTIGEN TRAJEKTORIEN VON VERKEHRSTEILNEHMERN**

(57) Verfahren zum Charakterisieren von zukünftigen Trajektorien (Y) von Verkehrsteilnehmern umfassend die Schritte: Erhalten von Trajektorienhistorien der Verkehrsteilnehmer und Umfeldmerkmalen einer aktuellen Verkehrsszene in Form einer Eingabe (X) (V1); für jeweils einen der Verkehrsteilnehmer Bestimmen einer Einbettung (E) von auf diesen Verkehrsteilnehmer bezogenen Trajektorien- und/oder Umfeldmerkmalen in einen ersten Merkmalsraum (V2); Abbilden des Bildbereiches der Einbettung (E) auf einen zweiten Merkmalsraum (C) (V3) umfassend eine erste Anzahl (Nc) von Charakteristiken (C[i]), die jeweils die zukünftigen Trajektorien (Y) für diesen Verkehrsteilnehmer charakterisieren; eine Liste (P), deren Länge gleich der ersten Anzahl (Nc) ist und deren Einträge jeweils Wahrscheinlichkeiten (P[i]) für das Auftreten einer der zukünftigen Trajektorien (Yi) mit den jeweiligen Charakteristiken (C[i]) angeben; Prädizieren von Trajektorien (Y) für diesen Verkehrsteilnehmer (V4); Bestimmen, ob die Trajektorienprädiktionen (Y) auf unterschiedlichen Charakteristiken (C[i]) beruhen oder Realisierungen derselben Charakteristik (C[i]) sind (V5).

Fig. 4

EP 4 224 436 A1

**Beschreibung**

Die Erfindung betrifft ein Verfahren und ein Computerprogramm zum Charakterisieren von zukünftigen Trajektorien von Verkehrsteilnehmern.

Im Rahmen von AD/ADAS-Anwendungen, aber auch im Umfeld von Industrie 4.0 und kollaborativer Mensch-Roboter-Interaktion, reicht eine reine sensorielle Erfassung der Umwelt nicht aus. Vielmehr wird die zeitliche Vorhersage der Weiterentwicklung der dynamischen Szene mit all ihren eigenständigen Interakteuren, zum Beispiel Personen, Fahrzeuge, Radfahrer, immer wichtiger, um intelligente Entscheidungen für beispielsweise automatisierte Fahrzeuge treffen zu können. Hierbei ist nicht nur die Interaktion aller Interakteure, beispielsweise Verkehrsteilnehmer, untereinander wichtig, sondern auch die Interaktion dieser mit ihrer direkten Umwelt, zum Beispiel dem Verkehrsraum und/oder der Infrastruktur.

Um eine verlässliche und leistungsstarke Szenen-Vorhersage gewährleisten zu können, müssen alle diese expliziten, impliziten, regional geprägten und ereignisgeprägten Regeln/Informationen in Betracht gezogen werden und zur zeitlichen Vorhersage herangezogen werden. Die deutsche Patentanmeldung mit dem Aktenzeichen DE 10 2020 210 379.8 offenbart eine hybride Szenen-Repräsentation, die Interaktionen zwischen statischen und dynamischen Objekten und/oder Informationen modelliert.

Die deutsche Patentanmeldung mit dem Aktenzeichen DE 10 2021 203 440.3 offenbart eine Interaktions-Modellierung von Verkehrsteilnehmern umfassend automatisierte Fahrsysteme über den gesamten Verkehrsraum und über eine vorgegebene Zeit in der Vergangenheit mit der Fusionierung der Historie der Verkehrsteilnehmer mit allen statischen und dynamischen Teilen der Szene. Damit wird eine Vorhersage von Trajektorien/Verhalten von allen Verkehrsteilnehmern für eine bestimmte Zeit in die Zukunft ermöglicht.

Weiterer Stand der Technik hinsichtlich Interaktions-Modellierung ist z.B. in Gao et al.: VectorNet: Encoding HD Maps and Agent Dynamics from Vectorized Representation, Computer Vision and Pattern Recognition 2020, arXiv:2005.04259 und in Zhao et al.: Multi-Agent Tensor Fusion for Contextual Trajectory Prediction, Proceedings of the IEEE/CVF Conference on Computer Vision and Pattern Recognition (pp. 12126-12134) offenbart.

Dadurch, dass einzelne Trajektorienhistorien auf mehreren möglichen vorhergesagten Trajektorien dekodiert werden, wird eine Vielzahl von möglichen Zukunftsmodi berechnet, das heißt es entsteht ein one-to-many-mapping, bei dem Multi-Moden gelernt werden. Das one-to-many-mapping ermöglicht eine Abbildung der Historie eines Verkehrsteilnehmers oder Verkehrsagenten in einer bestimmten Umgebung auf mehreren zukünftigen Vorhersagen oder mehrere Modi. Beispielsweise ist die Umgebung eine T-Kreuzung. Ein PKW fährt an diese T-Kreuzung. Mögliche Modi sind geradeaus fahren, links abbiegen und rechts abbiegen.

Ohne Definition eines Modus ist es bei der Vorhersage der zukünftigen Bewegung eines Verkehrsagenten a priori nicht klar, ob zwei erhaltene Modi Realisierungen zweier verschiedener Modi oder zwei verschiedene Realisierungen eines Modus sind. Damit ist es auch nicht klar, ob Mittelwertbildung während eines Trainings stattfinden darf oder nicht.

Die Unklarheit der Trennlinien zwischen Modi beeinträchtigt nicht nur die Stabilität des Lernprozesses, sondern auch die Beurteilung der Qualität der Resultate. Eine Mittelung der Ausgabe bei gleicher Eingabe innerhalb eines korrekt definierten Modus ist dann sogar sinnvoll.

Ferner hat ein Modus an sich keine eindeutige Definition. Dies kann das Benutzererlebnis, den Trainings- und Fehlersuchprozess und die Ergebnisinterpretation beeinträchtigen.

Ein weiteres Problem ist, dass die Anzahl der Modi normalerweise festgelegt ist, diese jedoch nicht a priori bekannt ist.

Des Weiteren kann der Multi-Mode-Lernprozess instabil werden. Während des Trainings wird beispielsweise der Ausgabemodus, der einer Referenztrajektorie, das heißt der der ground truth, am nächsten liegt, für die Backpropagation berücksichtigt. Problematisch wird dann der Fall, dass der am nächsten liegende Modus ein anderer, bereits gut gelernter Modus war und einfach ausgewählt wurde, weil er näher an der ground truth liegt als eine andere, noch nicht gelernte Zufallsausgabe. Auf diese Weise würde ein schon gut gelernter Modus wieder verschlechtert, um sich an einen zweiten zu findenden Modus anzunähern.

Der Erfindung lag die Aufgabe zugrunde, wie bei einem one-to-many-mapping ein inter-mode averaging verhindert und die die Interpretierbarkeit von gelernten Modi und die Stabilität des Lernprozesses dieser Abbildung verbessert werden können.

Die Gegenstände der Ansprüche 1 und 13 lösen jeweils diese Aufgabe dadurch, dass ein Modus in einem zweiten Merkmalsraum, dieser entspricht einer latenten Darstellung, ausgewiesen wird. Der zweite Merkmalsraum stellt eine Charakteristik dar, die in einem Ausgaberaum, das ist der Raum der zukünftigen Trajektorien oder der Trajektorienprädiktionen der Verkehrsagenten, interpretierbar ist. Damit werden die Modi interpretierbar. Ferner können die Benutzer, Entwickler oder das Expertenwissen an der Definition dessen, was zwei Modi unterscheidet, involviert werden. In einer anderen Konfiguration wird die Charakteristik aus den Daten mit Hilfe einer adaptiven Verlustfunktion gelernt. Dieser Verlust veranlasst das erlernte Modell, beispielsweise ein künstliches neuronales Netzwerk, dazu, eine ground-truth-Trajektorie auf eine bestimmte Charakteristik abzubilden, oder von ihr abzuweichen.

Während des Trainings wird nicht wie üblich die Distanz zwischen der ground truth und der der ground truth am nächsten liegenden Ausgabe minimiert. Stattdessen wird die Distanz zwischen der ground truth und derjenigen Ausgabe minimiert, deren latente Repräsentation der latenten Repräsentation der ground truth am nächsten liegt. Damit wird eine Mittelung der Ausgänge zwischen den Modi, ein sogenanntes inter-mode averaging, verhindert.

Dieselbe Funktion kann für die Generierung aller Modi verwendet werden. Damit ist eine Funktion gemeint, deren Parameter, aber nicht deren Eingabe, unabhängig vom Modus sind, zum Beispiel ein künstliches neuronales Netzwerk, dessen Parameter unabhängig vom Modus sind. Diese Funktion akzeptiert zwei Eingaben: Neben der üblichen Eingabe, also der Historie aller Verkehrsagenten und die Darstellung der Szene, wie beispielsweise im eingangs genannten Stand der Technik offenbart, eine latente Darstellung, das heißt die Charakteristik. Dadurch ist es möglich, eine variable Anzahl von Modi für jede Eingabe zu erzeugen. Das Netzwerk wird so trainiert, dass es eine Ausgabe erzeugt, die eine Charakteristik erfüllt. Der zweite Merkmalsraum wird stark regularisiert.

Ein Aspekt der Erfindung betrifft ein Verfahren zum Charakterisieren von zukünftigen Trajektorien von Verkehrsteilnehmern. Das Verfahren umfasst die Schritte:

- Erhalten von

  ◦ Trajektorienhistorien der Verkehrsteilnehmer umfassend mittels Sensoren der Verkehrsteilnehmer gemessene und/oder mittels Fahrdynamik- und/oder Bewegungsmodellen simulierte und/oder aus Kartendaten extrahierte Positionen der Verkehrsteilnehmer in Abhängigkeit der Zeit und
  ◦ Umfeldmerkmalen einer aktuellen Verkehrsszene

  in Form einer Eingabe;
- für jeweils einen der Verkehrsteilnehmer Bestimmen einer Einbettung von auf diesen Verkehrsteilnehmer bezogenen Trajektorien- und/oder Umfeldmerkmalen in einen ersten Merkmalsraum;
- Abbilden des Bildbereiches der Einbettung auf einen zweiten Merkmalsraum umfassend

  ◦ eine erste Anzahl von Charakteristiken die jeweils die zukünftigen Trajektorien für diesen Verkehrsteilnehmer charakterisieren;
  ◦ eine Liste, deren Länge gleich der ersten Anzahl ist und deren Einträge jeweils Wahrscheinlichkeiten für das Auftreten einer der zukünftigen Trajektorien mit den jeweiligen Charakteristiken angeben;

- Prädizieren von Trajektorien für diesen Verkehrsteilnehmer;
- Bestimmen, ob die Trajektorienprädiktionen auf unterschiedlichen Charakteristiken beruhen oder Realisierungen derselben Charakteristiken sind.

Ein weiterer Aspekt der Erfindung betrifft ein Computerprogramm zum Charakterisieren von zukünftigen Trajektorien von Verkehrsteilnehmern. Das Computerprogramm umfasst Befehle, die eine Hardwareplattform eines Remote-Systems, eines Fahrerassistenzsystems oder eines autonomen Fahrsystems veranlassen, die Schritte eines Verfahrens nach einem der vorangehenden Ansprüche auszuführen, wenn das Computerprogramm von der Hardwareplattform ausgeführt wird.

Die Befehle des erfindungsgemäßen Computerprogramms umfassen Maschinenbefehle, Quelltext oder Objektcode geschrieben in Assemblersprache, einer objektorientierten Programmiersprache, beispielsweise C++, oder in einer prozeduralen Programmiersprache, beispielsweise C. Das Computerprogramm ist nach einem Aspekt der Erfindung ein Hardware unabhängiges Anwendungsprogramm, das beispielsweise über einen Datenträger oder ein Datenträgersignal mittels Software Over The Air Technologie bereitgestellt wird.

Vorteilhafte Ausgestaltungen der Erfindung ergeben sich aus den Definitionen, den Unteransprüchen, den Zeichnungen und der Beschreibung bevorzugter Ausführungsbeispiele.

Verkehrsteilnehmer umfassen Interakteure in Szenen einer Umwelt, beispielsweise in Szenen eines Verkehrsraums. Verkehrsteilnehmer sind beispielsweise Personen, wie etwa Fußgänger, Fahrzeuge, Fahrsysteme, und Fahrradfahrer. Fahrsysteme umfassen automatisierte Fahrsysteme von automatisierte bis autonome Fahrzeuge, Straßenfahrzeuge, People Mover, Shuttles, Roboter und Drohnen. Zu Verkehrsteilnehmern zählen auch intelligente Agenten, beispielsweise selbstfahrende Fahrzeuge, Roboter oder intelligente Infrastrukturelemente, beispielsweise intelligente Lichtanlagen, wie etwa Ampeln, die über Funktechnologie, beispielsweise Car-To-X-Communication, mit anderen Verkehrsteilnehmern kommunizieren.

Sensoren der Verkehrsteilnehmer umfassen u. a. Kameras, Radarsensoren, Lidarsensoren, Ultraschallsensoren, Akustiksensoren, Car2X-Einheiten.

Fahrdynamik- und/oder Bewegungsmodellen nutzen beispielsweise die Koordinaten der Verkehrsteilnehmer umfassend Positionen und/oder Orientierungen über einen bestimmten Zeitraum, um Trajektorienhistorien zu generieren. Das Fahrdynamik- oder Bewegungsmodells basiert beispielsweise auf einem Kalman-Filter. Die Simulation erfolgt beispielsweise mittels Software-, Hardware-, Model- und/oder Vehicle-inthe-Loop Verfahren.

Kartendaten umfassen Daten aus Echtzeit- und/oder Offlinekarten.

Umfeldmerkmale umfassen Häuser, Straßen, insbesondere Straßengeometrie und/oder -zustand, Schilder, Spurmarkierungen, Vegetation, bewegliche Verkehrsteilnehmer, Fahrzeuge, Fußgänger, Fahrradfahrer. Statische Umfeldmerkmale werden in zwei weitere Kategorien unterteilt. Elemente, die sich quasi nicht oder nur nach längeren Zeiträumen ändern, wechseln ihren Zustand kurzfristig nicht und werden als starr bezeichnet. Im Gegensatz dazu stehen Elemente, die den Zustand häufig wechsein können und somit zustandswechselnd sind. In die letzte Kategorie werden zum Beispiel Ampeln oder Wechselverkehrszeichen eingeordnet. Dynamische Umfeldmerkmale betreffen die beweglichen Verkehrsteilnehmer einer Verkehrsszene und umfassen deren Positionen und/oder Orientierungen.

In dem ersten Merkmalsraum ist jeder der Verkehrsteilnehmer über Koordinaten identifizierbar. Die Eingaben, also die Trajektorienhistorien und die Umfeldmerkmale, werden beispielsweise in Form eines Tensors erhalten.

Die Einbettung stellt auf den Verkehrsteilnehmer bezogene, auch agent-centric genannt, Informationen dar, die aus der Historie des betrachteten Verkehrsteilnehmers, der Verkehrsszene und der Historie der anderen Verkehrsteilnehmer fusioniert sind. Für jeden der Verkehrsteilnehmer kann eine jeweilige Einbettung erhalten werden. Nach einem Aspekt wird die Einbettung mittels einer lernbaren Funktion, beispielsweise eines künstlichen neuronalen Netzwerks, erhalten. Die Einbettung kann eine tensorielle Größe sein.

Der zweite Merkmalsraum ist der charakteristische Merkmalsraum, dessen Elemente eine Trajektorienprädiktion und/oder eine Referenztrajektorie durch eine Charakteristik ausweisen. Die Charakteristik charakterisiert die Trajektorienprädiktion und/oder die Referenztrajektorie. Damit ist der zweite Merkmalsraum im Raum der Trajektorienprädiktionen der Verkehrsteilnehmer interpretierbar. Die Merkmale, die jeweils die zukünftigen Trajektorien für diesen Verkehrsteilnehmer charakterisieren, sind nach einem Aspekt Elemente eines Tensors und bilden die erste Anzahl von Charakteristiken. Die Liste, deren Länge gleich der ersten Anzahl ist und deren Einträge jeweils Wahrscheinlichkeiten für das Auftreten einer der zukünftigen Trajektorien mit den jeweiligen Charakteristiken angeben, das heißt die Wahrscheinlichkeit der jeweiligen Charakteristik, ist nach einem Aspekt ein Wahrscheinlichkeitsvektor, dessen Länge gleich der ersten Anzahl ist.

Nach einem weiteren Aspekt umfasst das Verfahren die folgenden Schritte:

- Bestimmen einer zweiten Anzahl von Restcharakteristiken aus der ersten Anzahl der Charakteristiken, deren Wahrscheinlichkeit größer als ein erster Schwellenwert ist;
- Eingeben von der zweiten Anzahl von Datenpaaren umfassend jeweils die Einbettung und eine der Restcharakteristiken in ein erstes Maschinenlernmodell, das auf Trainingsdaten umfassend die Trajektorienprädiktionen und Referenztrajektorien trainiert wird oder wurde, Trajektorienprädiktionen mit den gegebenen Restcharakteristiken für diesen Verkehrsteilnehmer zu inferieren;
- Ausgeben der mit dem ersten Maschinenlernmodell inferierten Trajektorienprädiktionen.

Die erste Anzahl ist größer als die maximale Anzahl der Modi. Die zweite Anzahl von Restcharakteristiken, eine Funktion der Einbettung, ist die Anzahl der Modi, die eine minimale Restwahrscheinlichkeit, das ist der erste Schwellenwert, überschreiten. Zum Beispiel werden für eine Restwahrscheinlichkeit von 0,001 Modi, deren Wahrscheinlichkeiten unter 0,1 % liegen, ignoriert. Die Restwahrscheinlichkeit ist ein Konfigurationsparameter und kann nach verschiedenen Kriterien eingestellt werden, einschließlich ASIL-Stufe der jeweiligen Anwendung. Für jede Charakteristik, deren entsprechende Wahrscheinlichkeit größer als die Restwahrscheinlichkeit ist, werden die Einbettung und diese Charakteristik mithilfe des ersten Maschinenlernmodells, beispielsweise einem künstlichen neuronalen Netzwerk, auf eine Trajektorienprädiktion abgebildet. Nach einem Aspekt wird das erste Maschinenlernmodell mit demselben Parametersatz für alle Modi eingesetzt.

Ein Maschinenlernmodell entspricht einer lernbaren Funktion.

Nach einem weiteren Aspekt umfasst der zweite Merkmalsraum

- vorgegebene Merkmale mit vorgegebenen Merkmalsbereichen;
- vorgegebene Merkmale mit lernbaren Merkmalsbereichen;
- lernbare Merkmale

oder eine Kombination dieser Merkmale. Die vorgegebenen Merkmale umfassen beispielsweise

- Länge einer Trajektorie;
- räumliche Verteilung von Wegpunkten auf einer Trajektorie
- Orientierung einer Trajektorie;

- Fourier-Deskriptor einer Trajektorie;
- Umfeldmerkmale der jeweiligen Verkehrsszene

oder eine Kombination dieser. Im Falle der Kombination ist eine Charakteristik eine Merkmalsliste, beispielsweise ein Vektor, umfassend die jeweils einzelnen Merkmale.

Die vorgegebenen Merkmale können auf Expertenwissen basieren.

Die Länge der Trajektorie wird nach einem Aspekt durch eine Durchschnittsgeschwindigkeit ausgedrückt. Die Durchschnittsgeschwindigkeit entspricht dem Mittelwert der ersten Ableitungen der Trajektorie.

Die räumliche Verteilung der Punkte auf der Trajektorie wird nach einem Aspekt durch eine mittlere Beschleunigung ausgedrückt. Die mittlere Beschleunigung entspricht der zweiten Ableitung der Trajektorie.

Die Orientierung der Trajektorie wird nach einem Aspekt durch einen Orientierungsbin bis zu einem bestimmten Punkt in der Trajektorie ausgedrückt: Dies ist der Winkel des Vektors, der durch den ersten Punkt der Trajektorie und den bestimmten Punkt derselben Trajektorie gebildet wird. Die Referenz für die Messung dieses Winkels kann entweder die Orientierung des Verkehrsteilnehmers oder die aktuelle Bewegungsrichtung des Verkehrsteilnehmers sein. Eine Beispielkonfiguration ist der Winkel des Vektors, der durch den ersten und den letzten Punkt der Trajektorie definiert ist.

Der Fourier-Deskriptor ist eine skalen- und orientierungsinvariante Darstellung von geschlossenen Konturen. Es gibt jedoch Varianten, die offene Konturen berücksichtigen. Die niederfrequenten Merkmale stellen eine grobe Charakterisierung der Form der Trajektorie dar.

In einer anderen Konfiguration können Merkmale aus der Verkehrsszene, das heißt nicht nur Merkmale der Trajektorie, einbezogen werden, beispielsweise ob die Bewegung des Verkehrsteilnehmers, repräsentiert durch die Trajektorie, auf einer Straße oder einem Fußweg stattfindet. Hier kann beispielsweise ein stereotypisches Verhalten an typischer Verkehrsinfrastruktur abgebildet werden. Ein Beispiel ist das Annäherungsverhalten an eine Ampel auch mit Einbeziehung der gerade aktiven Ampelphase und sogar der lokalen Gepflogenheiten, in der diese Ampel steht. So kann es in einem Landesteil üblich sein, beim Übergang der Ampelphase von grün auf rot noch mit einem kurzen Beschleunigen vor der Ampel zu reagieren. In einer Konfiguration der vorgeschlagenen Lösung können die Charakteristiken der Modi pro Region oder Land gelernt werden.

Aus diesen vorgegebenen Merkmalen oder aus einer Teilmenge dieser Merkmale kann der zweite Merkmalsraum gebildet werden. Ein Beispiel für einen einfachen zweiten Merkmalsraum ist der Raum, der von den Merkmalen Orientierungsbin, Durchschnittsgeschwindigkeit, mittlere Beschleunigung aufgespannt wird. Für eine Einbettung, zum Beispiel eine fusionierte Darstellung von Historie des betrachteten Verkehrsteilnehmers, Historie der anderen Verkehrsagenten, und einer Darstellung der Verkehrsszene und einen latenten Vektor (45, 2, 4) in diesem zweiten Merkmalsraum wird das erste Maschinenlernmodell eine Trajektorie generieren, die einen Winkel von ca. 45 Grad mit der Orientierung des betrachteten Verkehrsteilnehmers oder dessen Bewegungsrichtung hat. Die durchschnittliche Differenz zwischen zwei aufeinanderfolgenden Punkten dieser Trajektorie beträgt ungefähr 2 Meter, wobei der Einfachheit halber ein Frame pro Sekunde angenommen wird. Die durchschnittliche Differenz der Differenzen beträgt ungefähr 4 Meter/s. In diesem Beispiel sind die Merkmale Orientierungsbin, Durchschnittsgeschwindigkeit, mittlere Beschleunigung vorgegeben. Die Merkmalsbereiche dieser festen Merkmale können entweder vorgegeben sein oder gelernt werden. Anderenfalls werden die Merkmale automatisch aus den Daten gelernt

In einer anderen Konfiguration könnte eine beliebige Kombination der drei vorgenannten Fälle in Betracht kommen. Beispielsweise können manche Merkmale gelernt werden, manche festgelegt mit lernbaren Merkmalsbereichen und manche festgelegt mit festen Merkmalsbereichen.

Nach einem weiteren Aspekt wird der Bildbereich der Einbettung mittels eines zweiten Maschinenlernmodells, das auf Trainingsdaten umfassend die Trajektorienprädiktionen und Referenztrajektorien trainiert wurde oder wird, den zweiten Merkmalsraum zu bestimmen, auf den zweiten Merkmalsraum abgebildet wird, wobei das zweite Maschinenlernmodell

- im Falle von vorgegebenen Merkmalen mit vorgegebenen Merkmalsbereichen trainiert wurde oder wird, die Wahrscheinlichkeiten für das Auftreten einer der zukünftigen Trajektorien mit den jeweiligen Merkmalen zu bestimmen;
- im Falle von vorgegebenen Merkmalen mit lernbaren Merkmalsbereichen auf den Trainingsdaten trainiert wird, zusätzlich Clusterzentren in dem zweiten Merkmalsraum zu bestimmen;
- im Falle von lernbaren Merkmalen auf den Trainingsdaten mittels Regularisierungen trainiert wird, zusätzlich die Merkmale zu lernen.

Das zweite Maschinenlernmodell ist beispielsweise ein künstliches neuronales Netzwerk mit einem Engpass, beispielsweise einer bottleneck Struktur oder einem pooling layer.

Hier bedeutet "zusätzlich" im Falle von vorgegebenen Merkmalen mit lernbaren Merkmalsbereichen, dass auch Wahrscheinlichkeiten gelernt werden und dass in diesem Fall der Fall von vorgegebenen Merkmalen mit vorgegebenen Merkmalsbereichen inkludiert ist.

Im Falle von lernbaren Merkmalen bedeutet "zusätzlich", dass der Fall von vorgegebenen Merkmalen mit vorgegebenen Merkmalsbereichen und der Falle von vorgegebenen Merkmalen mit lernbaren Merkmalsbereichen inkludiert sind.

Im Falle von vorgegebenen Merkmalen mit vorgegebenen Merkmalsbereichen ist der Charakteristik-Tensor eine feste lookup-Tabelle; er kann auch implizit über Bins in jedem Merkmal definiert werden. Die Ausgabe des zweiten Maschinenlernmodells ist der Wahrscheinlichkeitsvektor. Ein Beispiel ist der oben erwähnte Merkmalsraum Orientierungsbin, Durchschnittsgeschwindigkeit, mittlere Beschleunigung, wobei in jedem der drei Merkmale festgelegte Bins vordefiniert sind.

Im Falle von vorgegebenen Merkmalen mit lernbaren Merkmalsbereichen sind die Charakteristik und die Wahrscheinlichkeit Tensor-Ausgaben des zweiten Maschinenlernmodells. Ein Beispiel ist der oben erwähnte Merkmalsraum Orientierungsbin, Durchschnittsgeschwindigkeit, mittlere Beschleunigung. Die Merkmale weisen aber keine vordefinierten Bins auf. Stattdessen werden die Clusterzentren der Charakteristiken in diesem Merkmalsraum von den Training-Daten gelernt.

Im Falle von lernbaren Merkmalen sind die Charakteristik und die Wahrscheinlichkeit Tensor-Ausgaben des zweiten Maschinenlernmodells. Die Merkmale sind nicht vordefiniert, sondern sie werden gelernt.

Nach einem weiteren Aspekt werden die Trajektorienprädiktionen und die Referenztrajektorien mittels einer Funktion auf den zweiten Merkmalsraum abgebildet werden, wobei die Funktion

- im Falle von vorgegebenen Merkmalen mit vorgegebenen Merkmalsbereichen ein vorgegebener Berechnungsgraph ist, der für eine Trajektorie die Merkmale berechnet;
- im Falle von vorgegebenen Merkmalen mit lernbaren Merkmalsbereichen ein vorgegebener Berechnungsgraph ist und Clusterzentren der Charakteristiken in dem zweiten Merkmalsraum von Trainingsdaten gelernt werden;
- im Falle von lernbaren Merkmalen ein drittes Maschinenlernmodell ist, das auf den Trainingsdaten trainiert wird oder wurde, die Merkmale zu lernen, wobei eine Trajektorienprädiktion und eine Referenztrajektorie zu unterschiedlichen Modi zugeordnet werden, wenn eine Distanz der Trajektorienprädiktion zu der Referenztrajektorie einen zweiten Schwellenwert überschreitet.

Die Definitionen der charakteristischen Merkmale sind in dieser Funktion gekapselt.

Im Falle eines vorgegebenen Berechnungsgraphs berechnet die Funktion für eine Trajektorie beispielsweise Orientierungsbin, Durchschnittsgeschwindigkeit und mittlere Beschleunigung. Dies entspricht einem Klassifikationsproblem mit der ersten Anzahl von Klassen. Bei dieser Betrachtung werden die Ordnungsinformationen in den Bins nicht verwendet. Nach einem weiteren Aspekt wird mittels ordinaler Regression die Ordnungsbeziehung in jedem Merkmal berücksichtigt. Das Problem wird also als $N_F$ Ordinal-Regression-Problem mit jeweils $N_3$ Rängen angegangen, wobei $N_F$ die Anzahl der Merkmale des zweiten Merkmalsraums und $N_3$ die Anzahl der Bins pro Merkmal ist.

Das dritte Maschinenlernmodell lernt die lernbaren Merkmalsbereiche und lernbaren Merkmale.

Nach einem weiteren Aspekt wird eine Referenztrajektorie mittels der voran beschriebenen Funktion auf den zweiten Merkmalsraum abgebildet. In einem Trainings-Vorwärtspfad werden

- aus der ersten Anzahl von Charakteristiken die Referenz-Charakteristik bestimmt wird, deren Distanz zu dem Abbild der Referenztrajektorie minimal;
- die Trajektorienprädiktion ausgegeben wird, die aus der Eingabe der Einbettung und des voran bestimmten Restmerkmals in das erste Maschinenlernmodell resultiert.

Damit wird die Referenztrajektorie mittels der Charakteristiken des zweiten Merkmalsraums beschrieben. Das zweite Maschinenlernmodell bildet den ersten Merkmalsraum, umfassend die Historie aller Verkehrsteilnehmer und die Informationen der Verkehrsszene, auf den zweiten Merkmalsraum ab. Die Funktion hingegen, beispielsweise das dritte Maschinenlernmodell, bildet die Trajektorienprädiktionen und die Referenztrajektorien auf den zweiten Merkmalsraum ab. Erfindungsgemäß wird während des Trainings nur die Referenz-Charakteristik, die dem Abbild der Referenztrajektorie am nächsten liegt, zur Erzeugung einer Trajektorienprädiktion berücksichtigt. Mit anderen Worten wird eine einzelne Ausgabe pro Iteration auf einem Training-Sample erzeugt.

Die Distanz ist ein Abstandsmaß, beispielsweise L1-Norm, L2-Norm, p-Norm.

Nach einem weiteren Aspekt werden eine Trajektorienprädiktion und eine Referenztrajektorie mittels der voran beschriebenen Funktion jeweils auf den zweiten Merkmalsraum abgebildet. Im Falle von vorgegebenen Merkmalen mit vorgegebenen Merkmalsbereichen werden in einem Trainings-Rückwärtspfad

- eine erste Distanz der Trajektorienprädiktion zu der Referenztrajektorie;
- eine zweite Distanz einer vorgegebenen Referenz-Charakteristik, deren Distanz zu dem Abbild der Referenztrajektorie minimal ist, zu dem Abbild der Trajektorienprädiktion

bestimmt und eine Verlustfunktion umfassend die erste und die zweite Distanz minimiert.

Damit wird eine Trajektorienprädiktion erzeugt, die so nah wie möglich an der Referenztrajektorie ist, und deren Charakteristik so nah wie möglich an der festgelegten Restcharakteristik liegt.

Nach einem weiteren Aspekt werden verschiedene Terme der Verlustfunktion unterschiedlich gewichtet.

Nach einem weiteren Aspekt werden eine Trajektorienprädiktion und eine Referenztrajektorie mittels der voran beschriebenen Funktion jeweils auf den zweiten Merkmalsraum abgebildet. Im Falle von vorgegebenen Merkmalen mit lernbaren Merkmalsbereichen werden in einem Trainings-Rückwärtspfad

- eine erste Distanz der Trajektorienprädiktion zu der Referenztrajektorie;
- eine zweite Distanz einer Referenz-Charakteristik, deren Distanz zu dem Abbild der Referenztrajektorie minimal ist, zu dem Abbild der Referenztrajektorie
- eine dritte Distanz des Abbildes der Trajektorienprädiktion zu dem Abbild der Referenztrajektorie;
- ein erster Regularisierungsterm, der regularisiert, dass die Referenz-Charakteristik von dem Abbild der Referenztrajektorie gelernt wird und jeweilige Distanzen der übrigen der Charakteristiken zu dem Abbild der Referenztrajektorie relativ groß sind,

bestimmt und eine Verlustfunktion umfassend die erste, zweite und dritte Distanz und den ersten Regularisierungsterm minimiert.

In diesem Fall werden die Einträge des Charakteristik-Tensors ebenfalls gelernt und somit wird auch die Abweichung von der Referenztrajektorien-Charakteristik backpropagiert, aber mit Ableitungen in Bezug auf die Charakteristik und die Ausgabetrajektorie.

In einer anderen Konfiguration kann das Expertenwissen über mögliche Bereiche der Merkmale in den ersten Regularisierungsterm einfließen. Zum Beispiel könnte die Bedienung durchgesetzt werden, dass der paarweise Abstand in jeder Dimension einen gegebenen Mindestschwellenwert überschreiten sollte.

Nach einem weiteren Aspekt wird im Falle von lernbaren Merkmalen die Funktion, die die Trajektorienprädiktionen und die Referenztrajektorien auf den zweiten Merkmalsraum abbildet, in einem Trainings-Rückwärtspfad des dritten Maschinenlernmodell durch Minimierung einer adaptiven Verlustfunktion derart gelernt wird, dass im Falle, dass die erste Distanz der Trajektorienprädiktion zu der Referenztrajektorie den zweiten Schwellenwert unterschreitet, die Funktion die Referenztrajektorie auf die Referenz-Charakteristik abbildet.

Die adaptive Verlustfunktion veranlasst die Funktion dazu, das Abbild der Referenztrajektorie auf dieselbe Referenz-Charakteristik abzubilden, wenn die Referenz-Charakteristik eine gute Arbeit leistet, oder auf eine andere Charakteristik, wenn dies nicht der Fall ist. Im letzteren Fall kann beim nächsten Besuch des Trainingsverfahrens desselben Training-Samples eine andere Charakteristik ausgewählt werden. Damit wird Modus-Mittelung verhindert.

Die andere Charakteristik wird nach einem Aspekt zufällig ausgewählt. Die Verteilung, aus der diese andere Charakteristik entnommen wird, kann die Gleichverteilung sein. Diese kann aber auch die Verteilung der Wahrscheinlichkeiten sein, insbesondere wenn die Backpropagierung durch die Funktion erst nach einigen Epochen beginnt.

Nach einem weiteren Aspekt umfasst die adaptive Verlustfunktion einen zweiten Regularisierungsterm, der Parameter der Funktion regularisiert. Am Anfang des Trainings sind die Gewichte der Funktion zufällig. Damit die Funktion ähnliche Ausgabe-Trajektorien auf ähnliche Charakteristiken abbildet, sollen die Parameter der Funktion daher regularisiert werden.

Die Backpropagierung der adaptiven Verlustfunktion durch das dritte Maschinenlernmodell kann auch nach einigen Epochen des Trainings beginnen, um das Verhalten des Trainings zu stabilisieren. Auf der anderen Seite sollte die Backpropagierung des zweiten Regularisierungsterm ab der ersten Training-Epoche beginnen, da die Glattheit des dritten Maschinenlernmodells eine gewünschte Eigenschaft ist, die zur Stabilisierung des Trainings von Anfang an beiträgt.

Der erste Regularisierungsterm kann in diesem Fall ähnlich zu dem ersten Regularisierungsterm für vorgegebene Merkmale mit lernbaren Merkmalsbereichen sein. In einer anderen Konfiguration kann man annehmen, dass die Zeilen des Charakteristik-Tensors Singulärvektoren einer Matrix sind, die sich aus dem zweiten Maschinenlernmodell ergibt. Dies ist ein starker Regularisierungsterm und hat den Vorteil, dass jede Änderung in einer Charakteristik auch die anderen automatisch ändert, so dass sie immer orthogonal sind.

Nach einem weiteren Aspekt umfasst die jeweilige Verlustfunktion wenigstens einen Sparsamkeitsregularisierungsterm, auch sparsity regularizer genannt. Beispielsweise ist der Sparsamkeitsregularisierungsterm die L1-Norm des Wahrscheinlichkeitsvektors. Die Verlustfunktion kann zusätzlich einen sogenannten negative log likelihood Term umfassen. Der Sparsamkeitsregularisierungsterm erzwingt eine Sparsamkeit hinsichtlich der Anzahl der Modi.

Nach einem weiteren Aspekt wird die Einbettung als eine Multi-Agenten-Szenen-Einbettung wie folgt bestimmt:

- Kodieren der Umfeldmerkmale umfassend die Trajektorienhistorien;
- Kodieren von Verkehrsszenen-Informationen umfassend starre statische Umfeldmerkmale und zustandswechselnde statische Umfeldmerkmale;

- Zusammenführen der vorangehenden Kodierungen in eine hybride Szenen-Repräsentation umfassend wenigstens eine erste Schicht umfassend die starren statische Umfeldmerkmale, eine zweite Schicht umfassend die zustandswechselnden statische Umfeldmerkmale und eine dritte Schicht umfassend dynamische Umfeldmerkmale umfassend die Trajektorienhistorien;

- Bestimmen von Interaktionen zwischen den statischen und dynamischen Umfeldmerkmalen basierend auf der hybriden Szenen-Repräsentation, wobei eine erste Tensor-Einbettung der starren statischen Umfeldmerkmale, eine zweite Tensor-Einbettung der zustandswechselnden statischen Umfeldmerkmale und eine dritte Tensor-Einbettung der dynamischen Umfeldmerkmale erzeugt und die erste, zweite und dritte Tensor-Einbettung in einen Multi-Agenten-Szenen-Tensor zusammengeführt werden;

- Extrahieren pro Verkehrsteilnehmer die Merkmale des Multi-Agenten-Szenen-Tensors an der den Koordinaten des Verkehrsteilnehmers entsprechenden Stelle, Fusionieren dieser Merkmale mit der dritten Tensor-Einbettung des Verkehrsteilnehmers und pro Verkehrsteilnehmer und pro Verkehrsszene Erzeugen der Multi-Agenten-Szenen-Einbettung.

Die Umfeldmerkmale werden nach einem Aspekt mittels eines rekurrenten Netzwerks kodiert, das zeitlich kodierte Daten in den Trajektorienhistorien erkennt. Die Verkehrsszenen-Informationen werden nach einem Aspekt mittels eines Faltungsnetzwerks kodiert.

Zusammenführen bedeutet räumliches Zusammenführen. Beispielsweise werden räumliche Koordinaten der Verkehrsteilnehmer und/oder der Umfeldmerkmale in Pixeln dargestellt. Positionsdaten des Verkehrsteilnehmer und/oder der Umfeldmerkmale werden nach einem Aspekt über Karteninformationen erfasst. Ein Kartenausschnitt wird gebildet, indem jedem Pixel der Karteninformation entsprechenden Schicht der Umfeldszenen-Repräsentation ein Wert zugeordnet wird. Die Werte basieren auf diskreten Labeln der Karte, beispielsweise Zahlencodes für Straße, Fußgängerweg, unterbrochene Linie, Doppellinie, usw. Neben der Karte werden die Vorfahrtsregeln über die Verkehrsregelinformationen abgebildet. Hierzu wird in der Mitte einer jeden Fahrbahn eine Linie gezogen. An Kreuzungen werden zusätzlich Linien gezogen, die alle zulässigen Manöver darstellen. Das Zusammenführen erfolgt nach einem Aspekt mittels eines Interaktions-Tensor-Pooling-Moduls, das Software- und/oder Hardwarekomponenten umfassen kann.

Die hybride Szenen-Repräsentation schichtet ein Szenario in mehrere Schichten. Ein reales Szenario wird als Hybrid von statischen und dynamischen Informationen dargestellt. Das Szenario ist beispielsweise ein Bild mit i Pixeln in x-Richtung und j Pixeln in y-Richtung, in dem die räumlichen Koordinaten der Verkehrsteilnehmer in Pixeln dargestellt werden. Die einzelnen Schichten können ebenfalls als Bilder dargestellt werden und sind deckungsgleich zueinander angeordnet, beispielsweise liegen die Schichten deckungsgleich räumlich übereinander. Die erfindungsgemäße hybride Szenen-Repräsentation ist als ein Stapel übereinander liegender digitaler Fotos, beispielsweise von einer Kreuzungssituation aufgenommen aus der Vogelperspektive, vorstellbar. Andererseits wird dieser Stapel mit Bildern kombiniert mit weiteren Schichten von zum Teil rein semantischen Informationen, die zum Beispiel als reine Merkmalsvektoren repräsentiert sind.

Das Bestimmen der Interaktionen umfasst ein Vorhersagen von möglichen zukünftigen Interaktionen basierend auf den acht Schichten der hybriden Szenen-Repräsentation. Interaktionen betreffen jegliche Wechselwirkungen zwischen statischen und statischen, statischen und dynamischen und dynamischen und dynamischen Umfeldmerkmalen. In einem beispielhaften Szenario mit Interaktionen befindet sich ein PKW an einer Einmündung. An der Einmündung befindet sich ein Fußgänger. Die Vorfahrt wird über eine Ampel geregelt. Eine Interaktion ist die Ampelschaltung. Zeigt die Ampelschaltung beispielsweise dem PKW die grüne Ampelphase an und dem Fußgänger die rote Ampelphase, dann sind die weiteren, gelernten oder in den Trajektorienhistorien vorhandenen, Interaktionen, dass der Fußgänger stehen bleibt und der PKW in die Einmündung einfährt. Das Bestimmen der Interaktionen erfolgt nach einem Aspekt mittels eines Faltungs-Interaktionsnetzwerks.

Die Merkmale des Multi-Agenten-Szenen-Tensors werden nach einem Aspekt mittels eines Interaktions-Vektor-Extraktions-Modul pro Verkehrsteilnehmer extrahiert, das Software- und/oder Hardwarekomponenten umfassen kann.

Nach einem weiteren Aspekt wird die Multi-Agenten-Szenen-Einbettung dekodiert und pro Verkehrsteilnehmer eine Trajektorienprädiktion erzeugt. Die Dekodierung erfolgt nach einem Aspekt mittels eines rekurrenten Netzwerks.

Die Erfindung wird in den folgenden Ausführungsbeispielen verdeutlicht. Es zeigen:

Fig. 1 ein Ausführungsbeispiel von Modi,

Fig. 2 ein Ausführungsbeispiel für einen instabilen Lernprozess,

Fig. 3 ein Ausführungsbeispiel eines erfindungsgemäßen zweiten Merkmalsraums,

Fig. 4 ein Ausführungsbeispiel einer erfindungsgemäßen Interferenz,

Fig. 5 ein Ausführungsbeispiel eines erfindungsgemäßen Trainings-Vorwärtspfades,

Fig. 6 ein Ausführungsbeispiel eines erfindungsgemäßen Trainings-Rückwärtspfades im Falle von vorgegebenen Merkmalen mit vorgegebenen Merkmalsbereichen,

Fig. 7 ein Ausführungsbeispiel eines erfindungsgemäßen Trainings-Rückwärtspfades im Falle von vorgegebenen Merkmalen mit lernbaren Merkmalsbereichen und

Fig. 8 ein Ausführungsbeispiel eines erfindungsgemäßen Trainings-Rückwärtspfades im Falle von lernbaren Merkmalen.

In den Figuren bezeichnen gleiche Bezugszeichen gleiche oder funktionsähnliche Bezugsteile. Übersichtshalber werden in den einzelnen Figuren nur die jeweils relevanten Bezugsteile hervorgehoben.

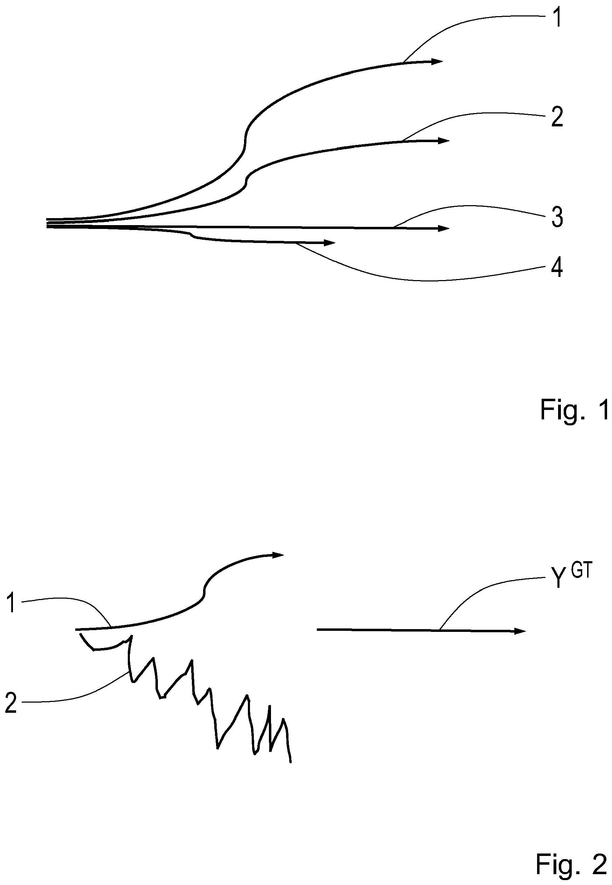

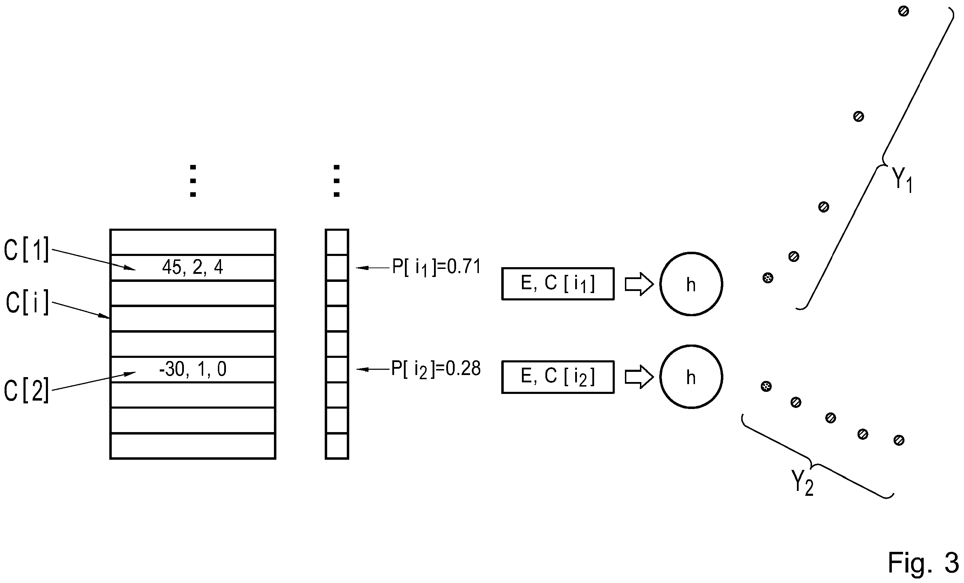

Fig. 1 zeigt die Vorhersagen von vier zukünftigen Modi 1-4 für die Bewegung eines Verkehrsteilnehmers. Ein Modus an sich hat zunächst keine Definition. Dies kann das Benutzererlebnis, den Trainings- und Fehlersuchprozess und die Ergebnisinterpretation beeinträchtigen. Ohne eine Definition des Modus ist es nicht klar, ob Modus 3 und Modus 3 zwei verschiedene Modi oder zwei Realisierungen eines Modus sind. Damit ist es auch nicht klar, ob während des Trainings Mittelwertbildung stattfinden darf oder nicht. Das erfindungsgemäße Verfahren leistet hierzu eine Lösung, nämlich in dem durch dessen Ausführung bestimmt wird, ob Trajektorienprädiktionen Y auf unterschiedlichen Charakteristiken beruhen oder Realisierungen derselben Charakteristik sind. Diese Charakteristiken charakterisieren die Modi. Erfindungsgemäß werden die Modi 1-4 durch Charakteristiken $C[i]$ eines zweiten Merkmalraums C ausgewiesen; siehe beispielsweise Fig. 3. Damit werden die Modi 1-4 erfindungsgemäß interpretierbar. Ferner können Benutzer und/oder Entwickler und/oder Expertenwissen an der Definition dessen, was zwei Modi unterscheidet, involviert werden.

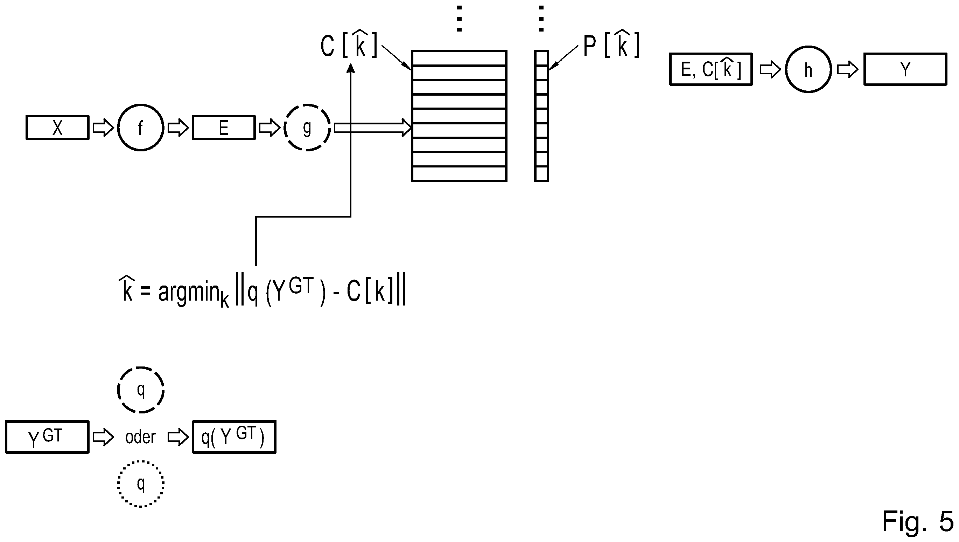

Fig. 2 zeigt, wie im bekannten Stand der Technik der Mulit-Mode-Lernprozess instabil wird. Während des Trainings wird in dem bekannten Stand der Technik ein Modus, der einer Referenztrajektorie $Y^{GT}$ am nächsten liegt, für die Rückwärtsspeisung, auch backpropagation genannt, berücksichtigt. Problematisch dabei wird der Fall, in dem der am nächsten liegende Modus bereits ein gut gelernter Modus 1 war und einfach ausgewählt wurde, weil er näher an der Referenztrajektorie $Y^{GT}$ liegt als ein anderer, noch nicht gelernter Modus 2. Das erfindungsgemäße Verfahren leistet hierzu eine Lösung, nämlich in dem durch dessen Ausführung eine Distanz zwischen der Referenztrajektorie $Y^{GT}$ und derjenigen Trajektorienprädiktion Y minimiert wird, deren latente Repräsentation, das heißt deren Charakteristik, der latenten Repräsentation der Referenztrajektorie $Y^{GT}$ am nächsten liegt, siehe Fig. 5. Damit wird eine Mittelung zwischen den Modi verhindert.

In Fig. 3 wird der zweite Merkmalsraum C von den drei vorgegebenen Merkmalen ($\theta_\infty$, $s$, $a$) aufgespannt. $\theta_\infty$ charakterisiert die Orientierung einer Trajektorienprädiktion Y, nämlich beispielsweise den Winkel des Vektors, der durch den ersten und den letzten Punkt der Trajektorie definiert ist. $s$ charakterisiert die Länger der Trajektorienprädiktion Y oder die Durchschnittsgeschwindigkeit, $a$ charakterisiert die räumliche Verteilung der Punkte auf der Trajektorie oder die mittlere Beschleunigung. Die Charakteristik $C[i_1]$ = (45, 2, 4) entspricht einem latenten Vektor in dem zweiten Merkmalsraum C. Für eine Einbettung E und dem latenten Vektor (45, 2, 4) wird dann das erste Maschinenlernmodell h erfindungsgemäß eine Trajektorienprädiktion $Y_1$ generieren, die einen Winkel von ca. 45 Grad mit der Orientierung oder der Bewegungsrichtung des betrachteten Verkehrsteilnehmers hat, wobei die durchschnittliche Differenz zwischen zwei aufeinanderfolgenden Punkten dieser Trajektorie ungefähr 2 Meter beträgt und die durchschnittliche Differenz der Differenzen ungefähr 4 Meter pro Sekunde beträgt. Der Einfachheit halber wird eine Framerate von 1.0 Frame pro Sekunde angenommen. Für die Einbettung E und den latenten Vektor $C[i_2]$=(-30, 1, 0) wird dann das erste Maschinenlernmodell h erfindungsgemäß eine Trajektorienprädiktion $Y_2$ entsprechend generieren.

In Fig. 3, wie in den anderen Fig., bedeutet der Kreis mit durchgehender Linie, dass die jeweilige eingekreiste Funktion eine lernbare Funktion ist. Das erste Maschinenlernmodell h wird trainiert und ist damit eine lernbare Funktion.

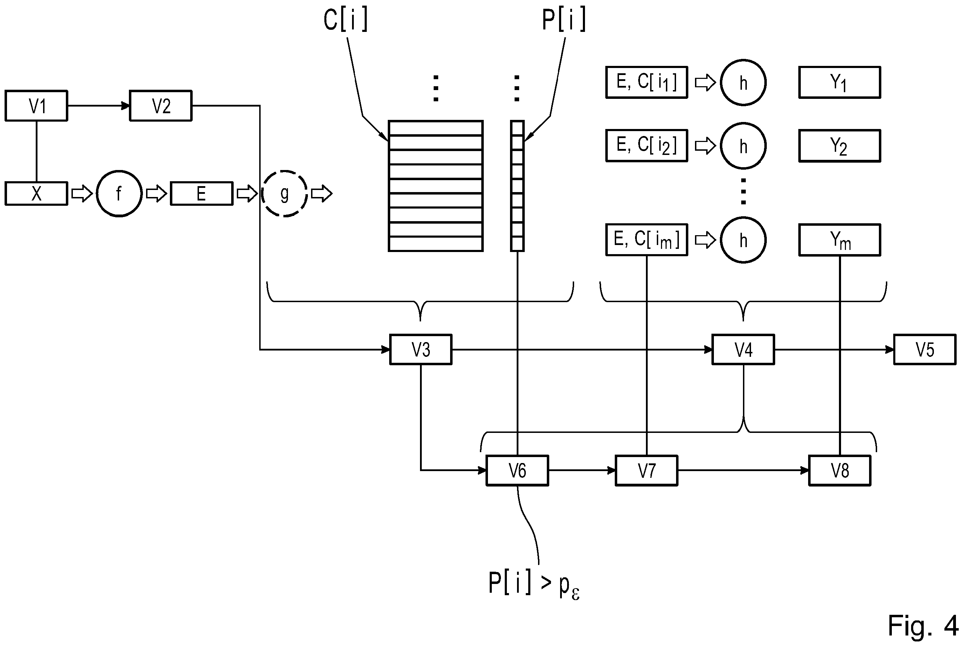

Fig. 4 zeigt den Inferenzaufbau.

In einem Verfahrensschritt V1 werden als Eingaben Trajektorienhistorien aller Verkehrsteilnehmer und Umfeldmerkmalen einer aktuellen Verkehrsszene erhalten.

In einem Verfahrensschritt V2 wird für jeweils einen der Verkehrsteilnehmer eine Einbettung E von auf diesen Verkehrsteilnehmer bezogenen Trajektorien- und/oder Umfeldmerkmalen, umfassend die Trajektorienhistorien dieses Verkehrsteilnehmers, in den ersten Merkmalsraum bestimmt mittels einer lernbaren Funktion f, zum Beispiel eines vierten künstlichen neuronalen Netzwerks.

Die Einbettung E ist beispielsweise eine Multi-Agenten-Szenen-Einbettung wie in der deutschen Patentanmeldung mit dem Aktenzeichen DE 10 2021 203 440.3 offenbart. Die Multi-Agenten-Szenen-Einbettung wird durch die folgenden Schritte erhalten:

- Kodieren der Umfeldmerkmale umfassend die Trajektorienhistorien;

- Kodieren von Verkehrsszenen-Informationen umfassend starre statische Umfeldmerkmale und zustandswechselnde statische Umfeldmerkmale;

- Zusammenführen der vorangehenden Kodierungen in eine hybride Szenen-Repräsentation umfassend wenigstens eine erste Schicht umfassend die starren statische Umfeldmerkmale, eine zweite Schicht umfassend die zustandswechselnden statische Umfeldmerkmale und eine dritte Schicht umfassend dynamische Umfeldmerkmale umfassend die Trajektorienhistorien;

- Bestimmen von Interaktionen zwischen den statischen, dynamischen und zwischen den statischen und dynamischen Umfeldmerkmalen basierend auf der hybriden Szenen-Repräsentation, wobei eine erste Tensor-Einbettung der starren statischen Umfeldmerkmale, eine zweite Tensor-Einbettung der zustandswechselnden statischen Umfeldmerkmale und eine dritte Tensor-Einbettung der dynamischen Umfeldmerkmale erzeugt und die erste, zweite und dritte Tensor-Einbettung in einen Multi-Agenten-Szenen-Tensor zusammengeführt werden;

- Extrahieren pro Verkehrsteilnehmer die Merkmale des Multi-Agenten-Szenen-Tensors an der den Koordinaten des Verkehrsteilnehmers entsprechenden Stelle, Fusionieren dieser Merkmale mit der dritten Tensor-Einbettung des Verkehrsteilnehmers und pro Verkehrsteilnehmer und pro Verkehrsszene Erzeugen der Multi-Agenten-Szenen-Einbettung.

Alternativ kann die Einbettung E mittels des in Gao et al.: VectorNet: Encoding HD Maps and Agent Dynamics from Vectorized Representation, Computer Vision and Pattern Recognition 2020, arXiv:2005.04259, offenbarten VectorNets oder ähnlicher Ansätze oder eines reinen Faltungsnetzwerks erzeugt werden.

Durch das erfindungsgemäße Verfahren wird dabei die Stabilität des Lernprozesses, umfassend das Modus-Mittelwertbildungs-Problem und das Problem der Interpretierbarkeit von gelernten Modi, gelöst.

In einem Verfahrensschritt V3 wird der Bildbereich der Einbettung E auf den zweiten Merkmalsraum C mittels eines zweiten Maschinenlernmodells g abgebildet. Der zweite Merkmalsraum C umfasst eine erste Anzahl Nc von Charakteristiken C[i], die jeweils die zukünftigen Trajektorien Y für diesen Verkehrsteilnehmer charakterisieren, und eine Liste, beispielsweise einen Vektor, P, mit Länge gleich der ersten Anzahl Nc ist und Einträgen jeweils gleich den Wahrscheinlichkeiten P[i] für das Auftreten einer der zukünftigen Trajektorien $Y_i$ mit den jeweiligen Charakteristiken C[i].

Damit ermöglicht das erfindungsgemäße Verfahren, für jede Einbettung E eine variable Anzahl von Modi zu erzeugen.

In einem Verfahrensschritt V4 werden die Trajektorien Y für diesen Verkehrsteilnehmer prädiziert und in einem Verfahrensschritt V5 wird in einem Trainingsprozess bestimmt, ob die Trajektorienprädiktionen Y auf unterschiedlichen Charakteristiken beruhen oder Realisierungen derselben Charakteristik sind.

Hierzu wird einem Verfahrensschritt 6 eine zweite Anzahl $N_M$ von Restcharakteristiken C[$i_m$] aus der ersten Anzahl Nc der Charakteristiken C[i], deren Wahrscheinlichkeit P[i] größer als ein erster Schwellenwert $p_\varepsilon$ ist, bestimmt. In einem Verfahrensschritt V7 werden die zweite Anzahl $N_M$ von Datenpaaren umfassend jeweils die Einbettung E und eine der Restcharakteristiken C[$i_m$] in das erste Maschinenlernmodell h eingegeben. In einem Verfahrensschritt V8 werden für diese Einbettung E die mit dem ersten Maschinenlernmodell h inferierten Trajektorienprädiktionen $Y_{1,...,m}$ ausgegeben. Zu jeder Einbettung E wird damit eine variable Anzahl 1,..., $N_M$ von Modi erzeugt. Das erste Maschinenlernmodell h wird derart trainiert, dass es Trajektorienprädiktionen $Y_{1,...,m}$ erzeugt, die jeweils eine Restcharakteristik C[$i_{1,...,m}$] erfüllt.

In Fig. 4, wie in den anderen Fig., bedeutet der Kreis mit gestrichelter Linie, dass die jeweils eingekreiste Funktion eine eingeschränkt lernbare Funktion ist. Das zweite Maschinenlernmodell g ist beispielsweise ein künstliches neuronales Netzwerk mit einem Engpass, einer sogenannten bottle-neck-Struktur.

Fig. 5 zeigt einen Trainings-Vorwärtspfad. Eine Referenztrajektorie $Y^{GT}$ wird mittels einer Funktion q auf den zweiten Merkmalsraum C abgebildet. Aus der ersten Anzahl Nc von Charakteristiken C[i] wird die Referenz-Charakteristik C[$\hat{k}$] bestimmt, deren Distanz $\|q(Y^{GT}) - C[k]\|$ zu dem Abbild $q(Y^{GT})$ der Referenztrajektorie $Y^{GT}$ minimal ist:

$$\hat{k} = argmin_k \|q(Y^{GT}) - C[k]\|.$$

Es wird die Trajektorienprädiktion Y ausgegeben, die aus der Eingabe der Einbettung E und der voran bestimmten Referenz-Charakteristik C[$\hat{k}$] in das erste Maschinenlernmodell h resultiert. Damit wird eine einzelne Ausgabe pro Iteration auf einem Trainingssample erzeugt. Die latente Repräsentation der so bestimmte Trajektorienprädiktion Y hat dann einen minimalen Abstand von der latenten Repräsentation der Referenztrajektorie $Y^{GT}$.

In Fig. 5, wie in den anderen Fig., bedeutet der Kreis mit punktierter Linie, dass die jeweils eingekreiste Funktion eine eingeschränkt vorgegebene Funktion ist. Die Funktion q ist im Falle von vorgegebenen Merkmalen mit vorgegebenen oder lernbaren Merkmalsbereichen ein fester Berechnungsgraph; im Falle von lernbaren Merkmalen ist die Funktion q ein eingeschränktes Maschinenlernmodell, beispielsweise ein künstliches neuronales Netzwerk mit einem Engpass.

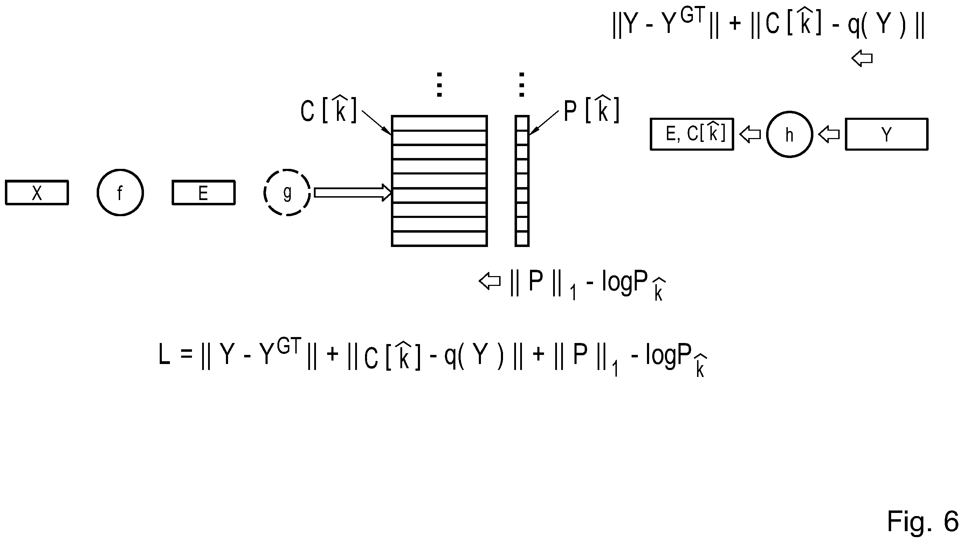

Fig. 6 zeigt einen Trainings-Rückwärtspfad im Falle von vorgegebenen Merkmalen mit vorgegebenen Merkmalsbereichen. Es wird eine erste Distanz $\|Y - Y^{GT}\|$ der Trajektorienprädiktion Y zu der Referenztrajektorie $Y^{GT}$ bestimmt.

Ferner wird eine zweite Distanz $\|C[\hat{k}] - q(Y)\|$ einer vorgegebenen Referenz-Charakteristik $C[\hat{k}]$, deren Distanz $\hat{k} = argmin_k\|q(Y^{GT}) - C[k]\|$ zu dem Abbild q($Y^{GT}$) der Referenztrajektorie $Y^{GT}$ minimal ist, zu dem Abbild q(Y) der Trajektorienprädiktion Y bestimmt. Die Charakteristik q(Y) der gesuchten Trajektorie Y wird damit so nah wie möglich an der vorgegebenen Referenz-Charakteristik $C[\hat{k}]$ liegen.

Ferner wird der folgende Term minimiert: $\|P\|_1 - logP_{\hat{k}}$.

P ist der Wahrscheinlichkeitsvektor und kann als Ausgabe des zweiten Maschinenlernmodells g erhalten werden. Durch den Term $\|P\|_1$ wird - die L1-Norm des Wahrscheinlichkeitsvektors minimiert. Das bedeutet, dass das zweite Maschinenlernmodell g derart gelernt wird, dass die Mehrheit der Komponenten von P kleiner als der erste Schwellenwert $p_\varepsilon$ oder gleich null ist. Damit werden wenige Modi erzeugt

$-logP_{\hat{k}}$ ist die negative log-likelihood Verlustfunktion, die die Wahrscheinlichkeit P[$\hat{k}$] maximiert.

In diesem Trainings-Rückwärtspfad wird dann die Verlustfunktion

$$L = \|Y - Y^{GT}\| + \|C[\hat{k}] - q(Y)\| + \|P\|_1 - logP_{\hat{k}}$$

minimiert.

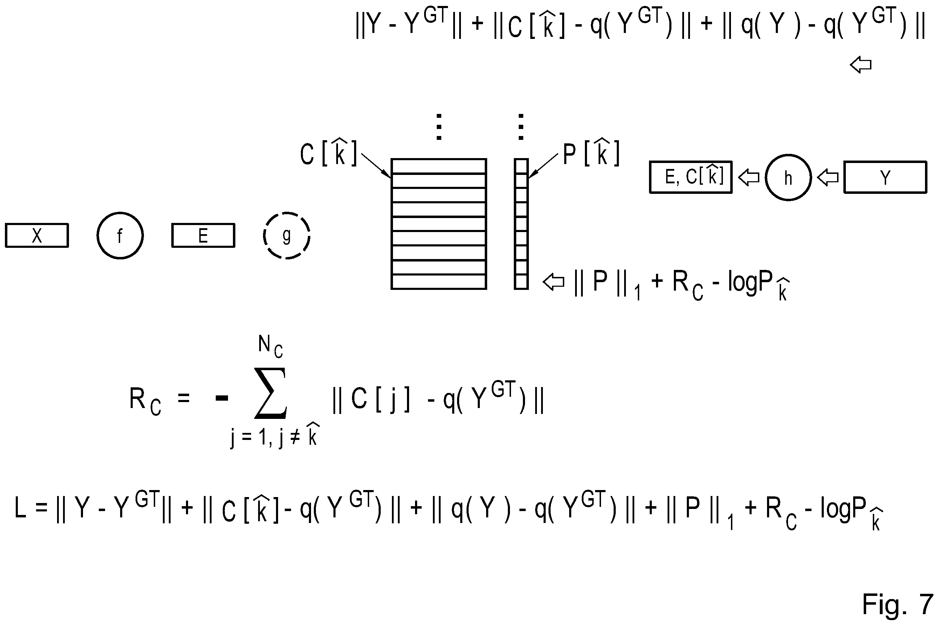

Fig. 7 zeigt einen Trainings-Rückwärtspfad im Falle von vorgegebenen Merkmalen mit lernbaren Merkmalsbereichen. Der Wert der Referenz-Charakteristik $C[\hat{k}]$ ist hier im Unterschied zu dem in Fig. 6 beschriebenen Fall nicht mehr vorgegeben, sondern muss gelernt werden. Deswegen werden eine zweite Distanz $\|C[\hat{k}] - q(Y^{GT})\|$ und eine dritte Distanz $\|q(Y) - q(Y^{GT})\|$ bestimmt.

Die zweite Distanz $\|C[\hat{k}] - q(Y^{GT})\|$ ist eine Distanz einer Referenz-Charakteristik $C[\hat{k}]$ zu dem Abbild $q(Y^{GT})$ der Referenztrajektorie $Y^{GT}$. Die zweite Distanz beschreibt eine Abweichung von der ground truth Charakteristik in Bezug auf die Referenz-Charakteristik $C[\hat{k}]$,

Die dritte Distanz $\|q(Y) - q(Y^{GT})\|$ ist die Distanz des Abbildes q(Y) der Trajektorienprädiktion Y zu dem Abbild $q(Y^{GT})$ der Referenztrajektorie $Y^{GT}$. Die dritte Distanz beschreibt eine Abweichung von der ground truth Charakteristik in Bezug auf die Trajektorienprädiktion Y.

Ferner wird ein erster Regularisierungsterm

$$R_C = - \sum_{j=1, j \neq \hat{k}}^{N_C} \|C[j] - q(Y^{GT})\|$$

bestimmt, der regularisiert, dass die Referenz-Charakteristik $C[\hat{k}]$ von dem Abbild $q(Y^{GT})$ der Referenztrajektorie $Y^{GT}$ gelernt wird und jeweilige Distanzen ($\|C[j] - g(Y^{GT})\|$) der übrigen der Charakteristiken C[j] zu dem Abbild $q(Y^{GT})$ der Referenztrajektorie $Y^{GT}$ relativ groß sind. In einer anderen Konfiguration kann das Expertenwissen über mögliche Bereiche der Charakteristiken in $R_C$ einfließen. Zum Beispiel kann die Bedienung durchgesetzt werden, dass der paarweise Abstand in jeder Dimension einen vorgegebenen Mindestschwellenwert überschreiten soll.

In diesem Trainings-Rückwärtspfad wird dann die Verlustfunktion

$$L = \|Y - Y^{GT}\| + \|C[\hat{k}] - q(Y^{GT})\| + \|q(Y) - q(Y^{GT})\| + \|P\|_1 + R_C - logP_{\hat{k}}$$

minimiert.

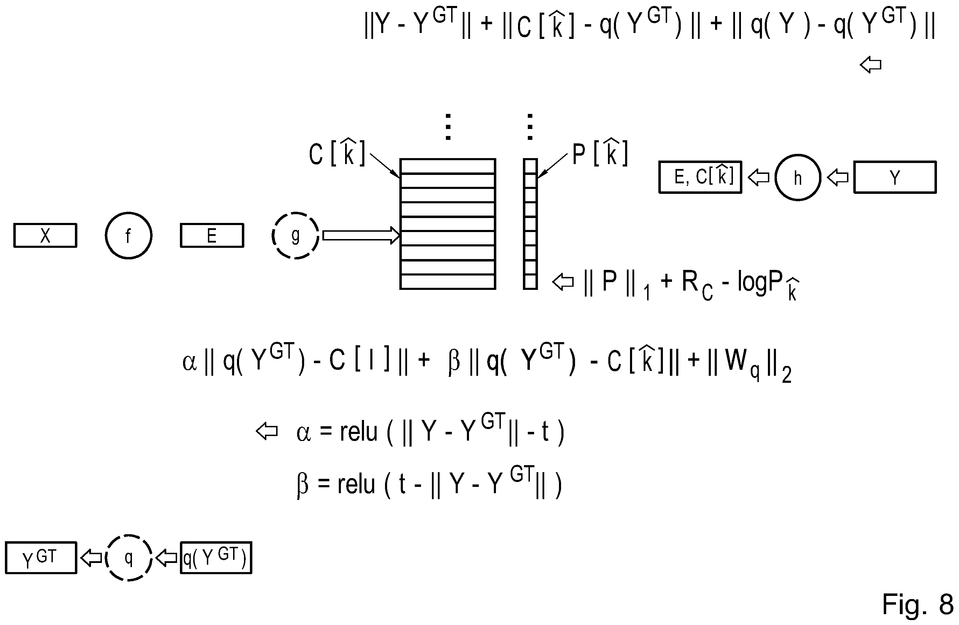

Fig. 8 zeigt einen Trainings-Rückwärtspfad im Falle von lernbaren Merkmalen. In diesem Fall wird die Funktion q in einem Trainings-Rückwärtspfad eines dritten Maschinenlernmodells durch Minimierung einer adaptiven Verlustfunktion

$$L_a = \alpha\|q(Y^{GT}) - C[l]\| + \beta\|q(Y^{GT}) - C[\hat{k}]\| + R_q$$

derart gelernt wird, dass im Falle, dass die erste Distanz ($\|Y - Y^{GT}\|$) der Trajektorienprädiktion Y zu der Referenztrajektorie $Y^{GT}$ einen zweiten Schwellenwert t unterschreitet, die Funktion q die Referenztrajektorie $Y^{GT}$ auf die Referenz-Charakteristik $C[\hat{k}]$ abbildet.

Dabei ist $R_q$ ein zweiter Regularisierungsterm $R_q = \|W_q\|_2$, der Parameter W = $(w_1, ..., w_q)$ der Funktion q regularisiert. $l \neq \hat{k}$ **ist eine Zahl aus der ersten Anzahl 0, 1, ..., Ne - 1.**

Der zweite Schwellenwert kann einer bestimmten Abweichung einer Trajektorienprädiktion Y von der Referenztrajektorie $Y^{GT}$ entsprechen, bei der Y und $Y^{GT}$ zwei unterschiedlichen Modi zugeordnet werden.

Der Faktor $\alpha$ kann beispielsweise wie folgt definiert werden: $\alpha \equiv relu(\|Y - Y^{GT}\| - t)$, wobei relu rectifier linear unit bedeutet. Das heißt:

$$\alpha = 0 \Leftrightarrow \|Y - Y^{GT}\| < t.$$

Entsprechend kann der Faktor $\beta$ als $\beta \equiv relu(t - \|Y - Y^{GT}\|)$ definiert werden, das heißt:

$$\beta = 0 \Leftrightarrow \|Y - Y^{GT}\| > t.$$

Wenn also $\alpha = 0$, dann ist $\beta$ relativ groß; wenn $\beta = 0$, dann ist $\alpha$ relativ groß. Damit ist für eine bestimmte Trajektorienprädiktion Y und deren Referenztrajektorie $Y^{GT}$ einer von den beiden Faktoren $\alpha$ oder $\beta$ null, während der jeweils andere einen positiven Wert annimmt.

Die adaptive Verlustfunktion $L_a$ veranlasst q dazu, $q(Y^{GT})$ auf dieselbe latente Charakteristik $C[\hat{k}]$ abzubilden, wenn $C[\hat{k}]$ eine gute Arbeit leistet ($\alpha$ ist groß und $\beta = 0$, das heißt $\|Y - Y^{GT}\|$ ist klein), oder auf eine andere **C[***l***]**, wenn dies nicht der Fall ist ($\beta$ ist groß und $\alpha = 0$). Im letzteren Fall kann beim nächsten Besuch des Trainingsverfahrens desselben Training-Samples eine andere Charakteristik ausgewählt werden. In anderen Wörtern könnte ein anderes $\hat{k}$ beim nächsten Vorwärtspfad ausgewählt werden, was die Modus-Mittelung verhindern könnte. **C[***l***]** kann zufällig ausgewählt werden. Die Verteilung, aus der die *l* entnommen wird, kann die Gleichverteilung sein. Diese kann aber auch die Verteilung P (Ausgabe von g) sein, insbesondere wenn die Backpropagierung durch q erst nach einigen Epochen beginnt (und somit P-Werte teilwiese sinnvoll sind).

Bezugszeichen

| | |
|---|---|
| 1-4 | Modi |
| V1-V8 | Verfahrensschritte |
| Y | Trajektorienprädiktion |
| $Y^{GT}$ | Referenztrajektorie |
| X | Eingabe |
| E | Einbettung |
| C | zweiter Merkmalsraum |
| s | Länge einer Trajektorie |
| a | räumliche Verteilung von Wegpunkten |
| $\theta$ | Orientierung |
| C[i] | Charakteristik |
| $C[i_m]$ | Restcharakteristik (Inferenz) |
| $C[\hat{k}]$ | Referenz-Charakteristik (Training) |
| Nc | erste Anzahl von Charakteristiken |
| $N_M$ | zweite Anzahl von Restcharakteristiken |
| P | Liste, Vektor von Wahrscheinlichkeiten |
| P[i] | Wahrscheinlichkeiten für das Auftreten einer der zukünftigen Trajektorien $Y_i$ mit den jeweiligen Charakteristiken C[i] |
| $p_\varepsilon$ | erster Schwellenwert |
| t | zweiter Schwellenwert |
| h | erstes Maschinenlernmodell |
| g | zweites Maschinenlernmodell |
| q | Funktion, die entweder als ein vorgegebener Berechnungsgraph oder ein drittes Maschinenlernmodell umgesetzt wird |
| f | viertes Maschinenlernmodell |
| W | Vektor von Parametern $w_1,...,w_q$ von q |
| L | Verlustfunktion |
| $L_a$ | adaptive Verlustfunktion |
| $\alpha, \beta$ | Faktor |

| Rc | erster Regularisierungsterm |
|---|---|
| $R_q$ | zweiter Regularisierungsterm |
| $\| \|$ | Distanz, Abstandsmaß |
| $\| \|_1$ | L1-Norm |
| $\| \|_2$ | L1-Norm |
| relu | rectifier linear unit |

**Patentansprüche**

1. Verfahren zum Charakterisieren von zukünftigen Trajektorien (Y) von Verkehrsteilnehmern umfassend die Schritte:

   • Erhalten von

      ◦ Trajektorienhistorien der Verkehrsteilnehmer umfassend mittels Sensoren der Verkehrsteilnehmer gemessene und/oder mittels Fahrdynamik- und/oder Bewegungsmodellen simulierte und/oder aus Kartendaten extrahierte Positionen der Verkehrsteilnehmer in Abhängigkeit der Zeit und
      ◦ Umfeldmerkmalen einer aktuellen Verkehrsszene

   in Form einer Eingabe (X) (V1);
   • für jeweils einen der Verkehrsteilnehmer Bestimmen einer Einbettung (E) von auf diesen Verkehrsteilnehmer bezogenen Trajektorien- und/oder Umfeldmerkmalen in einen ersten Merkmalsraum (V2);
   • Abbilden des Bildbereiches der Einbettung (E) auf einen zweiten Merkmalsraum (C) (V3) umfassend

      ◦ eine erste Anzahl (Nc) von Charakteristiken (C[i]), die jeweils die zukünftigen Trajektorien (Y) für diesen Verkehrsteilnehmer charakterisieren;
      ◦ eine Liste (P), deren Länge gleich der ersten Anzahl (Nc) ist und deren Einträge jeweils Wahrscheinlichkeiten (P[i]) für das Auftreten einer der zukünftigen Trajektorien ($Y_i$) mit den jeweiligen Charakteristiken (C[i]) angeben;

   • Prädizieren von Trajektorien (Y) für diesen Verkehrsteilnehmer (V4);
   • Bestimmen, ob die Trajektorienprädiktionen (Y) auf unterschiedlichen Charakteristiken (C[i]) beruhen oder Realisierungen derselben Charakteristik (C[i]) sind (V5).

2. Verfahren nach Anspruch 1, umfassend die Schritte:

   • Bestimmen einer zweiten Anzahl ($N_M$) von Restcharakteristiken ($C[i_m]$) aus der ersten Anzahl (Nc) der Charakteristiken (C[i]), deren Wahrscheinlichkeit (P[i]) größer als ein erster Schwellenwert ($p_\varepsilon$) ist (V6);
   • Eingeben von der zweiten Anzahl ($N_M$) von Datenpaaren umfassend jeweils die Einbettung (E) und eine der Restcharakteristiken ($C[i_m]$) in ein erstes Maschinenlernmodell (h), das auf Trainingsdaten umfassend die Trajektorienprädiktionen (Y) und Referenztrajektorien ($Y^{GT}$) trainiert wird oder wurde, Trajektorienprädiktionen ($Y_{1,...,m}$) mit den gegebenen Restcharakteristiken ($C[i_m]$) für diesen Verkehrsteilnehmer zu inferieren (V7);
   • Ausgeben der mit dem ersten Maschinenlernmodell (h) inferierten Trajektorienprädiktionen ($Y_{1,...,m}$) (V8).

3. Verfahren nach einem der vorangehenden Ansprüche, wobei der zweite Merkmalsraum (C)

   • vorgegebene Merkmale mit vorgegebenen Merkmalsbereichen;
   • vorgegebene Merkmale mit lernbaren Merkmalsbereichen;
   • lernbare Merkmale

   oder eine Kombination dieser Merkmale umfasst, und die vorgegebene Merkmale

   • Länge (s) einer Trajektorie;
   • räumliche Verteilung (a) von Wegpunkten auf einer Trajektorie
   • Orientierung ($\theta$) einer Trajektorie;
   • Fourier-Deskriptor einer Trajektorie;
   • Umfeldmerkmale der jeweiligen Verkehrsszene

oder eine Kombination dieser umfassen, wobei im Falle der Kombination eine Charakteristik (C[i]) eine Merkmalsliste umfassend die jeweils einzelnen Merkmale ist.

4. Verfahren nach einem der vorangehenden Ansprüche, wobei der Bildbereich der Einbettung (E) mittels eines zweiten Maschinenlernmodells (g), das auf Trainingsdaten umfassend die Trajektorienprädiktionen (Y) und Referenztrajektorien ($Y^{GT}$) trainiert wurde oder wird, den zweiten Merkmalsraum (C) zu bestimmen, auf den zweiten Merkmalsraum (C) abgebildet wird, wobei das zweite Maschinenlernmodell (g)

- im Falle von vorgegebenen Merkmalen mit vorgegebenen Merkmalsbereichen trainiert wurde oder wird, die Wahrscheinlichkeiten (P[i]) für das Auftreten einer der zukünftigen Trajektorien ($Y_i$) mit den jeweiligen Merkmalen zu bestimmen;
- im Falle von vorgegebenen Merkmalen mit lernbaren Merkmalsbereichen auf den Trainingsdaten trainiert wird, zusätzlich Clusterzentren in dem zweiten Merkmalsraum (C) zu bestimmen;
- im Falle von lernbaren Merkmalen auf den Trainingsdaten mittels Regularisierungen ($R_c$, $R_q$) trainiert wird, zusätzlich die Merkmale zu lernen.

5. Verfahren nach einem der vorangehenden Ansprüche, wobei die Trajektorienprädiktionen (Y) und die Referenztrajektorien ($Y^{GT}$) mittels einer Funktion (q) auf den zweiten Merkmalsraum (C) abgebildet werden, wobei die Funktion (q)

- im Falle von vorgegebenen Merkmalen mit vorgegebenen Merkmalsbereichen ein vorgegebener Berechnungsgraph ist, der für eine Trajektorie die Merkmale berechnet;
- im Falle von vorgegebenen Merkmalen mit lernbaren Merkmalsbereichen ein vorgegebener Berechnungsgraph ist und Clusterzentren der Charakteristiken (C[i]) in dem zweiten Merkmalsraum von Trainingsdaten gelernt werden;
- im Falle von lernbaren Merkmalen ein drittes Maschinenlernmodell ist, das auf den Trainingsdaten trainiert wird oder wurde, die Merkmale zu lernen, wobei eine Trajektorienprädiktion (Y) und eine Referenztrajektorie ($Y^{GT}$) zu unterschiedlichen charakterisierenden Merkmalen zugeordnet werden, wenn eine Distanz ($\|Y - Y^{GT}\|$) der Trajektorienprädiktion (Y) zu der Referenztrajektorie ($Y^{GT}$) einen zweiten Schwellenwert (t) überschreitet.

6. Verfahren nach einem der Ansprüche 2 bis 5, wobei eine Referenztrajektorie ($Y^{GT}$) mittels einer Funktion (q) nach Anspruch 5 auf den zweiten Merkmalsraum (C) abgebildet wird und in einem Trainings-Vorwärtspfad

- aus der ersten Anzahl (Nc) von Charakteristiken (C[i]) die Referenz-Charakteristik (C[k]) bestimmt wird, deren Distanz ($\|q(Y^{GT}) - C[k]\|$) zu dem Abbild ($q(Y^{GT})$) der Referenztrajektorie ($Y^{GT}$) minimal ($\hat{k} = argmin_k \|q(Y^{GT}) - C[k]\|$) ist;
- die Trajektorienprädiktion (Y) ausgegeben wird, die aus der Eingabe der Einbettung und der voran bestimmten Referenz-Charakteristik ($C[\hat{k}]$) in das erste Maschinenlernmodell (h) resultiert.

7. Verfahren nach einem der Ansprüche 2 bis 6, wobei eine Trajektorienprädiktion (Y) und eine Referenztrajektorie ($Y^{GT}$) mittels einer Funktion (q) nach Anspruch 5 jeweils auf den zweiten Merkmalsraum (C) abgebildet werden und im Falle von vorgegebenen Merkmalen mit vorgegebenen Merkmalsbereichen in einem Trainings-Rückwärtspfad

- eine erste Distanz ($\|Y - Y^{GT}\|$) der Trajektorienprädiktion (Y) zu der Referenztrajektorie ($Y^{GT}$);
- eine zweite Distanz ($\|C[\hat{k}] - q(Y)\|$) einer vorgegebenen Referenz-Charakteristiken ($C[\hat{k}]$), deren Distanz ($\hat{k} = argmin_k \|q(Y^{GT}) - C[\hat{k}]\|$) zu dem Abbild ($q(Y^{GT})$) der Referenztrajektorie ($Y^{GT}$) minimal ist, zu dem Abbild ($q(Y)$) der Trajektorienprädiktion (Y)

bestimmt werden und eine Verlustfunktion (L) umfassend die erste ($\|Y - Y^{GT}\|$) und die zweite Distanz ($\|C[\hat{k}] - q(Y)\|$) minimiert wird.

8. Verfahren nach einem der Ansprüche 2 bis 6, wobei eine Trajektorienprädiktion (Y) und eine Referenztrajektorie ($Y^{GT}$) mittels einer Funktion (q) nach Anspruch 5 jeweils auf den zweiten Merkmalsraum (C) abgebildet werden und im Falle von vorgegebenen Merkmalen mit lernbaren Merkmalsbereichen in einem Trainings-Rückwärtspfad

- eine erste Distanz ($\|Y - Y^{GT}\|$) der Trajektorienprädiktion (Y) zu der Referenztrajektorie ($Y^{GT}$);
- eine zweite Distanz ($\|C[\hat{k}] - q(Y^{GT})\|$) einer Referenz-Charakteristiken ($C[\hat{k}]$) zu dem Abbild ($q(Y^{GT})$) der Referenztrajektorie ($Y^{GT}$);

• eine dritte Distanz ($\|q(Y) - q(Y^{GT})\|$) des Abbildes ($q(Y)$) der Trajektorienprädiktion ($Y$) zu dem Abbild ($q(Y^{GT})$) der Referenztrajektorie ($Y^{GT}$);

$$R_C = -\sum_{j=1, j \neq \hat{k}}^{N_C} \|C[j] - q(Y^{GT})\|$$

• ein erster Regularisierungsterm ( ), der regularisiert, dass die Referenz-Charakteristik ($C[\hat{k}]$) von dem Abbild ($q(Y^{GT})$) der Referenztrajektorie ($Y^{GT}$) gelernt wird und jeweilige Distanzen ($\|C[j] - q(Y^{GT})\|$) der übrigen der Charakteristiken ($C[j]$) zu dem Abbild ($q(Y^{GT})$) der Referenztrajektorie ($Y^{GT}$) relativ groß sind,

bestimmt werden und eine Verlustfunktion ($L$) umfassend die erste ($\|Y - Y^{GT}\|$), zweite ($\|C[\hat{k}] - q(Y^{GT})\|$) und dritte

$$R_C = -\sum_{j=1, j \neq \hat{k}}^{N_C} \|C[j] - q(Y^{GT})\|$$

Distanz ($\|q(Y) - q(Y^{GT})\|$) und den ersten Regularisierungsterm ( ) minimiert wird.

9. Verfahren nach den Ansprüchen 2, 5 und 8, wobei im Falle von lernbaren Merkmalen die Funktion ($q$) in einem Trainings-Rückwärtspfad des dritten Maschinenlernmodell durch Minimierung einer adaptiven Verlustfunktion ($L_a = \alpha \|q(Y^{GT}) - C[l]\| + \beta \|q(Y^{GT}) - C[\hat{k}]\|$) derart gelernt wird, dass im Falle, dass die erste Distanz ($\|Y - Y^{GT}\|$) der Trajektorienprädiktion ($Y$) zu der Referenztrajektorie ($Y^{GT}$) den zweiten Schwellenwert ($t$) unterschreitet ($\alpha = relu(\|Y - T^{GT}\| - t)$, $\beta = relu(t - \|Y - Y^{GT}\|)$), die Funktion ($q$) die Referenztrajektorie ($Y^{GT}$) auf die Referenz-Charakteristik ($C[\hat{k}]$) abbildet.

10. Verfahren nach Anspruch 9, wobei die adaptive Verlustfunktion ($L_a$) einen zweiten Regularisierungsterm ($R_q = \|W_q\|_2$) umfasst, der Parameter ($W=(w_1, ..., w_q)$) der Funktion ($q$) regularisiert.

11. Verfahren nach einem der Ansprüche 7-10, wobei die jeweilige Verlustfunktion wenigstens einen Term ($\|P\|_1 - logP_{\hat{k}}$) umfasst.

12. Verfahren nach einem der vorangehenden Ansprüche, wobei die Einbettung ($E$) als eine Multi-Agenten-Szenen-Einbettung wie folgt bestimmt wird:

• Kodieren der Umfeldmerkmale umfassend die Trajektorienhistorien;
• Kodieren von Verkehrsszenen-Informationen umfassend starre statische Umfeldmerkmale und zustandswechselnde statische Umfeldmerkmale;
• Zusammenführen der vorangehenden Kodierungen in eine hybride Szenen-Repräsentation umfassend wenigstens eine erste Schicht umfassend die starren statische Umfeldmerkmale, eine zweite Schicht umfassend die zustandswechselnden statische Umfeldmerkmale und eine dritte Schicht umfassend dynamische Umfeldmerkmale umfassend die Trajektorienhistorien;
• Bestimmen von Interaktionen zwischen den statischen, dynamischen und zwischen den statischen und dynamischen Umfeldmerkmalen basierend auf der hybriden Szenen-Repräsentation, wobei eine erste Tensor-Einbettung der starren statischen Umfeldmerkmale, eine zweite Tensor-Einbettung der zustandswechselnden statischen Umfeldmerkmale und eine dritte Tensor-Einbettung der dynamischen Umfeldmerkmale erzeugt und die erste, zweite und dritte Tensor-Einbettung in einen Multi-Agenten-Szenen-Tensor zusammengeführt werden;
• Extrahieren pro Verkehrsteilnehmer die Merkmale des Multi-Agenten-Szenen-Tensors an der den Koordinaten des Verkehrsteilnehmers entsprechenden Stelle, Fusionieren dieser Merkmale mit der dritten Tensor-Einbettung des Verkehrsteilnehmers und pro Verkehrsteilnehmer und pro Verkehrsszene Erzeugen der Multi-Agenten-Szenen-Einbettung.

13. Computerprogramm zum Charakterisieren von zukünftigen Trajektorien ($Y$) von Verkehrsteilnehmern umfassend Befehle, die eine Hardwareplattform Remote-Systems, eines Fahrerassistenzsystems oder eines autonomen Fahrsystems veranlassen, die Schritte eines Verfahrens nach einem der vorangehenden Ansprüche auszuführen, wenn das Computerprogramm von der Hardwareplattform ausgeführt wird.

1

2

3

4

Fig. 1

1

2

γ<sup>GT</sup>

Fig. 2

Fig. 3

EP 4 224 436 A1

Fig. 4

$$\hat{k} = \operatorname{argmin}_k \| q(Y^{GT}) - C[k] \|$$

X → f → E → g → C[$\hat{k}$]   P[$\hat{k}$]

E, C[$\hat{k}$] → h → Y

Y$^{GT}$ → oder → q(Y$^{GT}$)

q

q

Fig. 5

EP 4 224 436 A1

EP 4 224 436 A1

$$\|Y - Y^{GT}\| + \|C[\hat{k}] - q(Y)\|$$

$C[\hat{k}]$   $P[\hat{k}]$

$$\boxed{E, C[\hat{k}]} \Leftarrow \bigcirc h \Leftarrow \boxed{Y}$$

$$\boxed{X} \quad \bigcirc f \quad \boxed{E} \quad \bigcirc g \Rightarrow$$

$$\Leftarrow \|P\|_1 - \log P_{\hat{k}}$$

$$L = \|Y - Y^{GT}\| + \|C[\hat{k}] - q(Y)\| + \|P\|_1 - \log P_{\hat{k}}$$

Fig. 6

EP 4 224 436 A1

$$\|Y - Y^{GT}\| + \|C[\hat{k}] - q(Y^{GT})\| + \|q(Y) - q(Y^{GT})\|$$

$$C[\hat{k}] \qquad P[\hat{k}] \qquad E, C[\hat{k}] \Leftarrow h \Leftarrow Y$$

$$X \quad f \quad E \quad g$$

$$\Leftarrow \|P\|_1 + R_C - \log P_{\hat{k}}$$

$$R_C = -\sum_{j=1,\, j \neq \hat{k}}^{N_C} \|C[j] - q(Y^{GT})\|$$

$$L = \|Y - Y^{GT}\| + \|C[\hat{k}] - q(Y^{GT})\| + \|q(Y) - q(Y^{GT})\| + \|P\|_1 + R_C - \log P_{\hat{k}}$$

Fig. 7

EP 4 224 436 A1

$$\|Y - Y^{GT}\| + \|C[\hat{k}] - q(Y^{GT})\| + \|q(Y) - q(Y^{GT})\|$$

$C[\hat{k}]$

$P[\hat{k}]$

$E, C[\hat{k}] \Leftarrow h \Leftarrow Y$

$X \rightarrow f \rightarrow E \rightarrow g \Rightarrow$

$\Leftarrow \|P\|_1 + R_C - \log P_{\hat{k}}$

$$\alpha \| q(Y^{GT}) - C[l]\| + \beta \| q(Y^{GT}) - C[\hat{k}]\| + \|W_q\|_2$$

$$\Leftarrow \alpha = relu(\|Y - Y^{GT}\| - t)$$

$$\beta = relu(t - \|Y - Y^{GT}\|)$$

$Y^{GT} \Leftarrow q \Leftarrow q(Y^{GT})$

Fig. 8

Europäisches
Patentamt

European
Patent Office

Office européen
des brevets

**EUROPÄISCHER RECHERCHENBERICHT**

Nummer der Anmeldung

**EP 23 15 1466**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | PELLEGRINI S ET AL: "You'll never walk alone: Modeling social behavior for multi-target tracking", COMPUTER VISION, 2009 IEEE 12TH INTERNATIONAL CONFERENCE ON, IEEE, PISCATAWAY, NJ, USA, 29. September 2009 (2009-09-29), Seiten 261-268, XP031672590, ISBN: 978-1-4244-4420-5 | 1-11,13 | INV. G06V20/52 G06V10/82 G06V10/774 |
| Y | * Zusammenfassung; Abbildungen 1, 4, 5 * * Kapitel 3 * | 12 | |
| Y,D,P | DE 10 2021 203440 A1 (ZAHNRADFABRIK FRIEDRICHSHAFEN [DE]) 13. Oktober 2022 (2022-10-13) * Zusammenfassung; Abbildung 4 * | 12 | |

RECHERCHIERTE SACHGEBIETE (IPC)

G06V

Der vorliegende Recherchenbericht wurde für alle Patentansprüche erstellt

| Recherchenort | Abschlußdatum der Recherche | Prüfer |
|---|---|---|
| Den Haag | 6. Juni 2023 | Mitzel, Dennis |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes
Dokument

EPO FORM 1503 03.82 (P04C03)

EP 4 224 436 A1

**ANHANG ZUM EUROPÄISCHEN RECHERCHENBERICHT
ÜBER DIE EUROPÄISCHE PATENTANMELDUNG NR.**
EP 23 15 1466

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-06-2023

| Im Recherchenbericht angeführtes Patentdokument | Datum der Veröffentlichung | Mitglied(er) der Patentfamilie | Datum der Veröffentlichung |
|---|---|---|---|
| DE 102021203440 A1 | 13-10-2022 | DE 102021203440 A1 | 13-10-2022 |
| | | WO 2022214414 A1 | 13-10-2022 |

EPO FORM P0461

Für nähere Einzelheiten zu diesem Anhang : siehe Amtsblatt des Europäischen Patentamts, Nr.12/82

24

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102020210379

- DE 102021203440

**In der Beschreibung aufgeführte Nicht-Patentliteratur**

- **GAO et al.** VectorNet: Encoding HD Maps and Agent Dynamics from Vectorized Representation, Computer Vision and Pattern Recognition. *arXiv:2005.04259,* 2020

- **ZHAO et al.** Multi-Agent Tensor Fusion for Contextual Trajectory Prediction. *Proceedings of the IEEE/CVF Conference on Computer Vision and Pattern Recognition,* 12126-12134